# FASCICULE DE BREVET EUROPEEN

(11) **EP 3 620 631 B1**
(45) Date de publication et mention de la délivrance du brevet: **08.09.2021**
(21) Numéro de dépôt: 19185651.7
(22) Date de dépôt: 11.07.2019
(51) Int. Cl.: F02C 7/045, F02C 7/047, B64D 33/02

(54) **STRUCTURE D'ENTRÉE D'AIR D'UNE NACELLE D'AÉRONEF**
LUFTEINLASSSTRUKTUR FÜR EINE LUFTFAHRZEUGGONDEL
AIR INTAKE STRUCTURE FOR AN AIRCRAFT NACELLE

(30) Priorité: 05.09.2018 FR 1857967
(43) Date de publication de la demande: 11.03.2020
(73) Titulaire: AIRBUS OPERATIONS (S.A.S.), 31060 Toulouse (FR)
(72) Inventeur: LALANE, Jacques, 31060 TOULOUSE Cedex 9 (FR); PORTE, Alain, 31060 TOULOUSE Cedex 9 (FR); MERCAT, Florent, 31060 TOULOUSE Cedex 9 (FR)
(74) Mandataire: Gicquel, Olivier Yves Gérard

(56) Documents cités:
- EP-A1- 3 181 864
- EP-A2- 1 826 119
- WO-A2-2014/197035
- FR-A1- 2 887 518
- GB-A- 2 547 049
- US-B2- 9 719 422

## Description

### DOMAINE TECHNIQUE

La présente invention concerne une structure d'entrée d'air d'une nacelle d'aéronef, une nacelle comportant une telle structure d'entrée d'air et un aéronef comportant au moins une telle nacelle.

### ETAT DE LA TECHNIQUE ANTERIEURE

Un turbomoteur d'aéronef comprend une nacelle dans laquelle est logée la motorisation. La nacelle qui prend une forme annulaire présente à l'avant une structure d'entrée d'air.

La structure d'entrée d'air comprend globalement une face intérieure et une face extérieure en contact avec l'air extérieur, tandis que la face intérieure délimite une veine qui constitue le canal de soufflante. La structure d'entrée d'air a notamment pour fonction d'assurer l'écoulement aérodynamique de l'air, d'une part, vers le canal de soufflante et, d'autre part, vers l'extérieur de la nacelle.

La structure d'entrée d'air comprend classiquement une lèvre d'entrée d'air, un cadre de renfort avant et un panneau acoustique.

La lèvre d'entrée d'air présente en section la forme d'un U ouvert vers l'arrière, elle forme l'enveloppe extérieure de la partie avant de la structure d'entrée d'air et elle assure le partage de l'air entre la partie qui pénètre dans le canal de soufflante et la partie qui s'écoule autour de la nacelle.

Le cadre de renfort avant présente également en section la forme d'un U ouvert vers l'arrière et il est placé à l'intérieur et à l'arrière de la lèvre d'entrée d'air. Le cadre de renfort avant assure la tenue mécanique de la partie avant de la nacelle et aide à en préserver la forme et le dimensionnement.

Le panneau acoustique forme l'enveloppe intérieure de la nacelle, en arrière de la lèvre d'entrée d'air, du côté du canal de soufflante. Le panneau acoustique constitue donc une partie de la face intérieure.

Le panneau acoustique présente une structure propre à atténuer les bruits produits par le moteur et notamment par la soufflante. Ce panneau acoustique est de type composite sandwich, et il intègre une âme alvéolaire, par exemple en nid d'abeilles entre une paroi intérieure et une paroi extérieure. La paroi intérieure délimite le canal de soufflante et prolonge la lèvre d'entrée d'air, tandis que la paroi extérieure est à l'intérieur de la structure d'entrée d'air mais orientée vers l'extérieur de la nacelle.

Le volume entre la lèvre d'entrée d'air et le cadre de renfort avant permet la circulation d'un flux d'air chaud qui assure le dégivrage de la lèvre d'entrée d'air.

Bien qu'une telle structure d'entrée d'air donne entière satisfaction lors de son utilisation, il est souhaitable de trouver une structure qui permette d'augmenter la plage des fréquences atténuées, et d'augmenter la surface dégivrée et insonorisante.

Le document FR2887518 montre une telle structure d'entrée d'air dont la surface dégivrée est augmentée.

### EXPOSE DE L'INVENTION

Un objet de la présente invention est de proposer une structure d'entrée d'air d'une nacelle d'aéronef qui assure, en particulier, une plus grande surface dégivrée et insonorisante.

A cet effet, est proposée une structure d'entrée d'air pour une nacelle d'un aéronef, ladite structure d'entrée d'air délimitant une veine et comportant :
- une lèvre présentant une section en U orientée vers l'arrière,
- un premier panneau insonorisant fixé à l'arrière de la lèvre et délimitant la veine, et
- un deuxième panneau insonorisant fixé à l'arrière du premier panneau insonorisant et délimitant la veine,
où chaque panneau insonorisant comporte une âme alvéolaire qui est fixée entre une peau intérieure orientée vers la veine et percée de trous orientés vers la veine et une peau extérieure orientée à l'opposé, où la peau intérieure du premier panneau insonorisant présente une épaisseur supérieure à l'épaisseur de la peau intérieure du deuxième panneau insonorisant, et
où chacune des peaux intérieures comporte une source de chaleur qui est noyée dans la masse de ladite peau intérieure.

Une telle structure d'entrée d'air permet ainsi d'étendre la surface dégivrée et insonorisante de l'avant de la lèvre d'entrée d'air à l'arrière du panneau acoustique.

Avantageusement, la peau intérieure du premier panneau insonorisant présente une épaisseur de 3 à 6 mm.

Avantageusement, la peau intérieure du deuxième panneau insonorisant présente une épaisseur de 0,6 à 2,1 mm.

Avantageusement, chaque âme alvéolaire prend la forme d'un nid d'abeilles.

Avantageusement, les peaux intérieures des deux panneaux insonorisants forment un élément monobloc.

Selon un mode de réalisation particulier, au moins une desdites sources de chaleur est alimentée par une énergie électrique et ladite source de chaleur est noyée dans un isolant électrique.

Selon un mode de réalisation particulier, au moins une des sources de chaleur est alimentée par une énergie électrique, et ladite source de chaleur intègre un élément vibrant.

Selon un mode de réalisation particulier, au moins une des sources de chaleur est constituée de tubes dans lesquels circule un fluide chaud.

Avantageusement, pour chaque source de chaleur, la peau intérieure comporte un élément présentant des caractéristiques de conducteur thermique qui présente une face positionnée à proximité de la source de chaleur et une face en contact avec la veine.

L'invention propose également une nacelle comportant à l'avant, une structure d'entrée d'air selon l'une des variantes précédentes.

L'invention propose également un aéronef comportant au moins une nacelle selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de côté d'un aéronef selon l'invention,
la Fig. 2 est une vue en coupe et de côté d'une structure d'entrée d'air selon l'invention,
la Fig. 3 est une vue en perspective du détail III de la Fig. 2,
la Fig. 4 est une représentation schématique, selon un premier mode de réalisation de l'invention, d'une zone de la structure d'entrée d'air qui assure le dégivrage, et
la Fig. 5 est une représentation schématique, selon un deuxième mode de réalisation de l'invention, d'une zone de la structure d'entrée d'air qui assure le dégivrage.

### EXPOSE DETAILLE DE MODES DE REALISATION

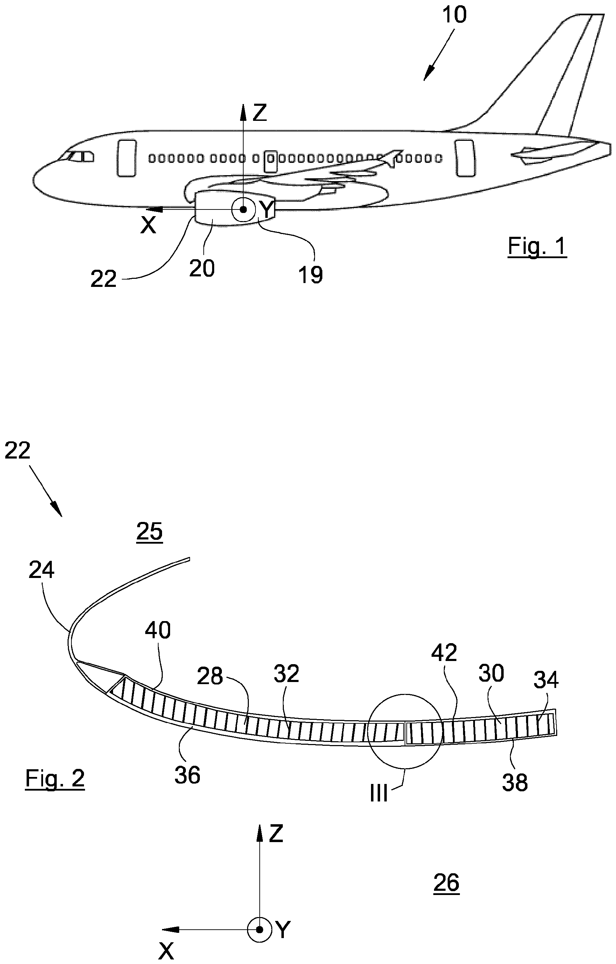

Dans la description qui suit, les termes relatifs à une position sont pris en référence à un aéronef en position d'avancement, c'est-à-dire comme il est représenté sur la Fig. 1.

La Fig. 1 montre un aéronef 10 qui comporte au moins un turbomoteur 20.

Dans toute la description qui va suivre, par convention, la direction X correspond à la direction longitudinale du turbomoteur 20, cette direction étant parallèle à l'axe longitudinal X du turbomoteur 20. D'autre part, la direction Y correspond à la direction orientée transversalement par rapport au turbomoteur 20, et la direction Z correspond à la direction verticale ou hauteur, ces trois directions X, Y, Z étant orthogonales entre elles.

Le turbomoteur 20 comporte classiquement une nacelle 19 qui comporte à l'avant une structure d'entrée d'air 22 comportant une lèvre qui délimite l'intérieur et l'extérieur de la nacelle 19. La lèvre se prolonge vers l'intérieur par une paroi intérieure qui s'étend autour d'une veine qui canalise l'air vers une motorisation qui comporte entre autres une soufflante.

La Fig. 2 montre une structure d'entrée d'air 22 qui comporte une lèvre 24 qui présente une section en U orientée vers l'arrière et qui prend globalement une forme annulaire. La structure d'entrée d'air 22 délimite une veine 26 qui canalise l'air vers la motorisation et en particulier vers la soufflante.

La lèvre 24 délimite l'extérieur 25 et l'intérieur 26 de la nacelle 19. L'intérieur 26 correspond à la veine 26.

La structure d'entrée d'air 22 comporte autour de la veine 26 un premier panneau insonorisant 28 et un deuxième panneau insonorisant 30 qui délimitent la veine 26. Le premier panneau insonorisant 28 est fixé à l'arrière de la lèvre 24 jusqu'au deuxième panneau insonorisant 30. Le deuxième panneau insonorisant 30 est fixé à l'arrière du premier panneau insonorisant 28.

Dans le cas de l'invention, le cadre de renfort avant a été supprimé et la structure d'entrée d'air 22 de l'invention est renforcée par la présence du premier panneau insonorisant 28 qui possède également des capacités structurelles.

Chaque panneau insonorisant 28, 30 comporte une âme alvéolaire 32, 34, par exemple en nid d'abeilles qui est fixée entre une peau intérieure 36, 38 orientée vers la veine 26 et une peau extérieure 40, 42 orientée à l'opposé. La peau intérieure 36, 38 est percée de trous orientés vers la veine 26 et permettant aux ondes sonores de se propager dans l'âme 32, 34 pour y être atténuées.

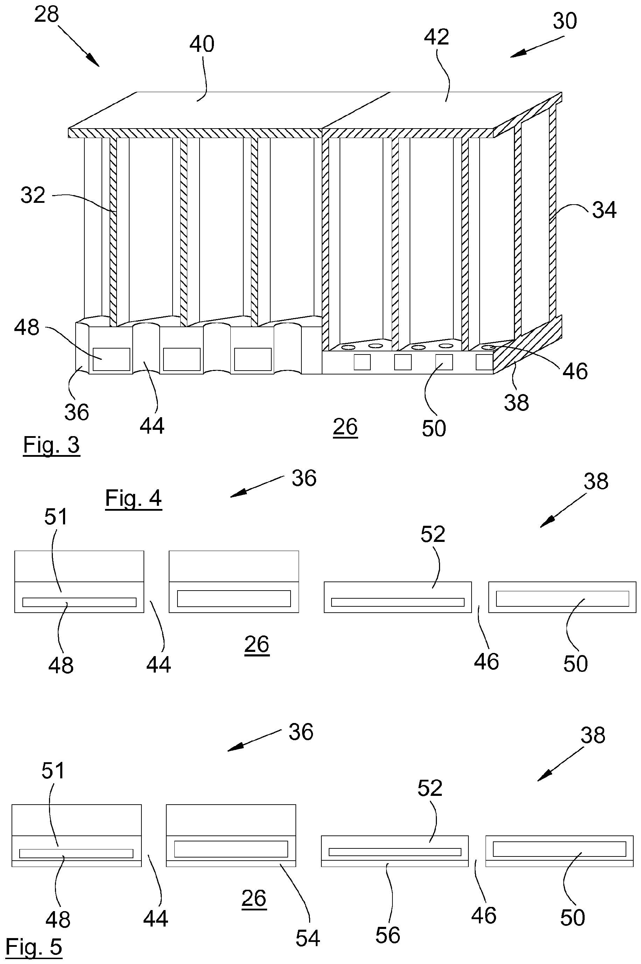

La Fig. 3 montre la zone de jonction entre le premier panneau insonorisant 28 et le deuxième panneau insonorisant 30 où chaque peau intérieure 36, 38 est percée de trous 44, 46.

D'une manière générale, la peau intérieure 36 du premier panneau insonorisant 28 présente une épaisseur supérieure à l'épaisseur de la peau intérieure 38 du deuxième panneau insonorisant 30.

L'atténuation des ondes sonores est donc étendue par rapport à l'état de la technique et la plage de fréquences atténuées est également étendue par l'utilisation de panneaux insonorisants basés sur deux technologies différentes.

Chacune des peaux intérieures 36, 38 comporte une source de chaleur 48, 50 qui est noyée dans la masse de ladite peau intérieure 36, 38. Cette source de chaleur 48, 50 permet de dégivrer la face de la peau intérieure 36, 38 qui est dans la veine 26.

En outre, la surface de la structure d'entrée d'air 22 qui est ainsi protégée du givre est étendue.

Selon un mode de réalisation particulier, le premier panneau insonorisant 28 est prévu pour atténuer les basses fréquences qui s'étendent entre 400 et 500 Hz. A cette fin, la peau intérieure 36 du premier panneau insonorisant 28 présente une épaisseur de 4 mm à 10 mm et les trous 44 ont donc également une longueur égale de 4 mm à 10 mm. Préférentiellement, l'épaisseur est de 3 à 6 mm.

Les volumes des alvéoles de l'âme alvéolaire 32 dans lesquels débouchent les trous 44 et les longueurs des trous 44 permettent de sélectionner la fréquence à atténuer. Par exemple, pour une hauteur de tube de 4 mm et une hauteur d'alvéole de 40 mm, les fréquences autour de 500 Hz sont atténuées.

Le deuxième panneau insonorisant 30 est prévu pour atténuer les hautes fréquences qui s'étendent entre 1000 et 4000 Hz. A cette fin, la peau intérieure 38 du deuxième panneau insonorisant 30 présente une épaisseur de l'ordre de 0,5 à 2,5 mm et les trous 46 ont donc également une longueur d'au moins 0,5 à 2,5 mm. Préférentiellement, l'épaisseur est de 0,6 à 2,1 mm.

La face de la peau intérieure 36 du premier panneau insonorisant 28 qui est orientée vers la veine 26 affleure la face de la peau intérieure 38 du deuxième panneau insonorisant 30 qui est orientée vers la veine 26 afin de réaliser une surface aérodynamique.

Selon un mode de réalisation particulier, les peaux intérieures 36 et 38 des deux panneaux insonorisants 28 et 30 sont un seul et même élément et forment ainsi ensemble un élément monobloc.

La source de chaleur 48, 50 peut être alimentée par une énergie électrique et peut être par exemple un élément électriquement résistif qui chauffe lorsqu'un courant les traverse ou peut intégrer un élément vibrant tel qu'un piézoélectrique. La source de chaleur 48, 50 peut être constituée par exemple de tubes dans lesquels circule un fluide chaud.

La Fig. 4 montre les peaux intérieures 36 et 38 dans lesquelles les sources de chaleur 48 et 50 sont noyées. En fonction des besoins de dégivrage, la quantité de chaleur requise peut varier le long des peaux intérieures 36, 38. Les dimensions des sources de chaleur 48, 50 peuvent donc être différentes pour différentes positions.

Dans le cas d'une source de chaleur 48, 50 électrique, la source de chaleur 48, 50 est noyée dans un isolant électrique 51, 52 qui évite un court-circuit et les contacts avec un technicien lors de la maintenance par exemple.

La Fig. 5 montre les peaux intérieures 36 et 38 pour lesquelles un élément 54, 56 présentant des caractéristiques de conducteur thermique est disposé de manière à guider la chaleur provenant des sources de chaleur 48, 50 vers l'endroit où la chaleur doit être dissipée pour dégivrer, ici la face en contact avec la veine 26. Chaque élément 54 présente une face qui est positionnée à proximité de la source de chaleur 48, 50 et une face en contact avec la veine 26.

Dans le cas d'une source de chaleur 48, 50 non électrique, l'élément 54 peut être en contact avec ladite source de chaleur 48, 50.

Dans le cas d'une source de chaleur 48, 50 électrique, l'élément 54 est séparé de ladite source de chaleur 48, 50 par l'isolant électrique 51, 52.

## Revendications

1. Structure d'entrée d'air (22) pour une nacelle (19) d'un aéronef (10), ladite structure d'entrée d'air (22) délimitant une veine (26) et comportant :
- une lèvre (24) présentant une section en U orientée vers l'arrière,
- un premier panneau insonorisant (28) fixé à l'arrière de la lèvre (24) et délimitant la veine (26),
- un deuxième panneau insonorisant (30) fixé à l'arrière du premier panneau insonorisant (28) et délimitant la veine (26),
où chaque panneau insonorisant (28, 30) comporte une âme alvéolaire (32, 34) qui est fixée entre une peau intérieure (36,38) orientée vers la veine (26) et percée de trous orientés vers la veine (26) et une peau extérieure orientée à l'opposé, où la peau intérieure (36) du premier panneau insonorisant (28) présente une épaisseur supérieure à l'épaisseur de la peau intérieure (38) du deuxième panneau insonorisant (30), et
où chacune des peaux intérieures (36, 38) comporte une source de chaleur (48, 50) qui est noyée dans la masse de ladite peau intérieur (36, 38).

2. Structure d'entrée d'air (22) selon la revendication 1, **caractérisée en ce que** la peau intérieure (36) du premier panneau insonorisant (28) présente une épaisseur de 3 à 6 mm.

3. Structure d'entrée d'air (22) selon l'une des revendications 1 ou 2, **caractérisée en ce que** la peau intérieure (38) du deuxième panneau insonorisant (30) présente une épaisseur de 0,6 à 2,1 mm.

4. Structure d'entrée d'air (22) selon l'une des revendications 1 à 3, **caractérisée en ce que** chaque âme alvéolaire (32, 34) prend la forme d'un nid d'abeilles.

5. Structure d'entrée d'air (22) selon l'une des revendications 1 à 4, **caractérisée en ce que** les peaux intérieures (36, 38) des deux panneaux insonorisants (28, 30) forment un élément monobloc.

6. Structure d'entrée d'air (22) selon l'une des revendications 1 à 5, **caractérisée en ce qu'**au moins une desdites sources de chaleur (48, 50) est alimentée par une énergie électrique et **en ce que** ladite source de chaleur (48, 50) est noyée dans un isolant électrique (51, 52).

7. Structure d'entrée d'air (22) selon l'une des revendications 1 à 5, **caractérisée en ce qu'**au moins une des sources de chaleur (48, 50) est alimentée par une énergie électrique, et **en ce que** ladite source de chaleur (48, 50) intègre un élément vibrant.

8. Structure d'entrée d'air (22) selon l'une des revendications 1 à 5, **caractérisée en ce qu'**au moins une des sources de chaleur (48, 50) est constituée de tubes dans lesquels circule un fluide chaud.

9. Structure d'entrée d'air (22) selon l'une des revendications précédentes, **caractérisée en ce que** pour chaque source de chaleur (48, 50), la peau intérieure (36, 38) comporte un élément (54, 56) présentant des caractéristiques de conducteur thermique qui présente une face positionnée à proximité de la source de chaleur (48, 50) et une face en contact avec la veine (26).

10. Nacelle (19) comportant à l'avant une structure d'entrée d'air (22) selon l'une des revendications précédentes.

11. Aéronef (10) comportant au moins une nacelle selon la revendication précédente.

## Patentansprüche

1. Lufteinlassstruktur (22) für eine Gondel (19) eines Luftfahrzeugs (10), wobei die Lufteinlassstruktur (22) einen Strom (26) begrenzt und Folgendes aufweist:
- eine Lippe (24), die einen nach hinten gerichteten U-förmigen Querschnitt aufweist,
- eine erste Schalldämpfungsplatte (28), die hinter der Lippe (24) befestigt ist und den Strom (26) begrenzt,
- eine zweite Schalldämpfungsplatte (30), die hinter der ersten Schalldämpfungsplatte (28) befestigt ist und den Strom (26) begrenzt,
wobei jede Schalldämpfungsplatte (28, 30) einen Wabenkern (32, 34) aufweist, der zwischen einer Innenhaut (36, 38), die dem Strom (26) zugewandt und mit dem Strom (26) zugewandten Löchern durchsetzt ist, und einer davon abgewandten Außenhaut befestigt ist, wobei die Innenhaut (36) der ersten Schalldämpfungsplatte (28) eine Dicke aufweist, die größer als die Dicke der Innenhaut (38) der zweiten Schalldämpfungsplatte (30) ist, und wobei jede der Innenhäute (36, 38) eine Wärmequelle (48, 50) aufweist, die in die Masse der Innenhaut (36, 38) eingebettet ist.

2. Lufteinlassstruktur (22) nach Anspruch 1, **dadurch gekennzeichnet, dass** die Innenhaut (36) der ersten Schalldämpfungsplatte (28) eine Dicke von 3 bis 6 mm aufweist.

3. Lufteinlassstruktur (22) nach einem der Ansprüche 1 oder 2, **dadurch gekennzeichnet, dass** die Innenhaut (38) der zweiten Schalldämpfungsplatte (30) eine Dicke von 0, 6 bis 2,1 mm aufweist.

4. Lufteinlassstruktur (22) nach einem der Ansprüche 1 bis 3, **dadurch gekennzeichnet, dass** jeder Wabenkern (32, 34) die Form einer Bienenwabe aufweist.

5. Lufteinlassstruktur (22) nach einem der Ansprüche 1 bis 4, **dadurch gekennzeichnet, dass** die Innenhäute (36, 38) der Schalldämmplatten (28, 30) ein einstückiges Element ausbilden.

6. Lufteinlassstruktur (22) nach einem der Ansprüche 1 bis 5, **dadurch gekennzeichnet, dass** zumindest eine der Wärmequellen (48, 50) mit elektrischer Energie versorgt wird und dass die Wärmequelle (48, 50) in einen elektrischen Isolator (51, 52) eingebettet ist.

7. Lufteinlassstruktur (22) nach einem der Ansprüche 1 bis 5, **dadurch gekennzeichnet, dass** zumindest eine der Wärmequellen (48, 50) mit elektrischer Energie versorgt wird und dass die Wärmequelle (48, 50) ein Schwingelement beinhaltet.

8. Lufteinlassstruktur (22) nach einem der Ansprüche 1 bis 5, **dadurch gekennzeichnet, dass** zumindest eine der Wärmequellen (48, 50) aus Rohren gebildet ist, in denen ein heißes Fluid zirkuliert.

9. Lufteinlassstruktur (22) nach einem der vorangehenden Ansprüche, **dadurch gekennzeichnet, dass** die Innenhaut (36, 38) für jede Wärmequelle (48, 50) ein Element (54, 56) mit wärmeleitenden Eigenschaften aufweist, das eine in der Nähe der Wärmequelle (48, 50) positionierte Fläche und eine mit dem Strom (26) in Kontakt stehende Fläche hat.

10. Gondel (19), die an der Vorderseite eine Lufteinlassstruktur (22) nach einem der vorangehenden Ansprüche aufweist.

11. Luftfahrzeug (10) mit zumindest einer Gondel nach dem vorangehenden Anspruch.

## Claims

1. Air intake structure (22) for a nacelle (11) of an aircraft (10), said air intake structure (22) delimiting a flow duct (26) and comprising:
- a lip (24) having a rearwardly directed U-shaped section,
- a first soundproofing panel (28) fixed to the rear of the lip (24) and delimiting the flow duct (26),
- a second soundproofing panel (31) fixed to the rear of the first soundproofing panel (28) and delimiting the flow duct (26),
wherein each soundproofing panel (28, 30) comprises a cellular core (32, 34) which is fixed between an interior skin (36, 38), facing towards the flow duct (26) and pierced with holes facing towards the flow duct (26), and an exterior skin facing in the opposite direction, wherein the interior skin (36) of the first soundproofing panel (28) has a thickness greater than the thickness of the interior skin (38) of the second soundproofing panel (30), and
wherein each of the interior skins (36, 38) comprises a heat source (48, 50) which is embedded in the mass of said interior skin (36, 38).

2. Air intake structure (22) according to Claim 1, **characterized in that** the interior skin (36) of the first soundproofing panel (28) has a thickness of 3 to 6 mm.

3. Air intake structure (22) according to either of Claims 1 and 2, **characterized in that** the interior skin (38) of the second soundproofing panel (30) has a thickness of 0.6 to 2.1 mm.

4. Air intake structure (22) according to one of Claims 1 to 3, **characterized in that** each cellular core (32, 34) takes the form of a honeycomb.

5. Air intake structure (22) according to one of Claims 1 to 4, **characterized in that** the interior skins (36, 38) of the two soundproofing panels (28, 30) form a one-piece element.

6. Air intake structure (22) according to one of Claims 1 to 5, **characterized in that** at least one of said heat sources (48, 50) is powered with electrical energy and **in that** said heat source (48, 50) is embedded in an electrical insulator (51, 52).

7. Air intake structure (22) according to one of Claims 1 to 5, **characterized in that** at least one of the heat sources (48, 50) is powered with electrical energy and **in that** said heat source (48, 50) incorporates a vibrating element.

8. Air intake structure (22) according to one of Claims 1 to 5, **characterized in that** at least one of the heat sources (48, 50) consists of tubes through which a hot fluid circulates.

9. Air intake structure (22) according to one of the preceding claims, **characterized in that**, for each heat source (48, 50), the interior skin (36, 38) comprises an element (54, 56) having thermal conductivity characteristics which has a face positioned close to the heat source (48, 50) and a face in contact with the flow duct (26).

10. Nacelle (19) comprising, at the front, an air intake structure (22) according to one of the preceding claims.

11. Aircraft (10) comprising at least one nacelle according to the preceding claim.
